Europäisches Patentamt

(19) European Patent Office

Office européen des brevets

(11) Numéro de publication: **0 087 115**
**B1**

(12) **FASCICULE DE BREVET EUROPEEN**

(45) Date de publication du fascicule du brevet:
**08.10.86**

(51) Int. Cl.⁴: **H 02 P 7/62, H 02 M 5/45**

(21) Numéro de dépôt: **83101461.8**

(22) Date de dépôt: **16.02.83**

(54) **Ensemble d'alimentation et de commande d'une machine tournante synchrone fonctionnant à vitesse variable.**

(30) Priorité: **19.02.82 FR 8202779**

(43) Date de publication de la demande:
**31.08.83 Bulletin 83/35**

(45) Mention de la délivrance du brevet:
**08.10.86 Bulletin 86/41**

(84) Etats contractants désignés:
**CH DE FR GB LI SE**

(56) Documents cités:
**EP - A - 0 066 191**
**DE - A - 3 021 864**
**FR - A - 2 385 252**

**BBC BROWN BOVERI REVIEW, vol. 67, no. 10, octobre 1980, pages 577-583, Baden, CH. V. SUCHANEK et al.: "Static frequency converters for variable-speed drives"**

(73) Titulaire: **CGEE ALSTHOM Société anonyme dite:, 13, rue Antonin Raynaud, F-92309 Levallois-Perret (FR)**

(72) Inventeur: **Godfroid, Henri, La vue des Vosges 12, rue des Sources, Salbert F-90300 Valdoie (FR)**

(74) Mandataire: **Weinmiller, Jürgen et al, Zeppelinstrasse 63, D-8000 München 80 (DE)**

**Description**

Dans le brevet français n° 2 385 252 pour un «Convertisseur statique alternatif-alternatif à thyristors pour moteur synchrone auto-piloté» on a donné un moyen pour diminuer l'effet néfaste sur le couple moteur des commutations du pont alimentant la machine synchrone appelé pont machine. Cet effet néfaste étant provoqué lorsque l'on fonctionne à fréquence basse au dessous de celle pour laquelle le pont machine ne peut plus fonctionner en commutation naturelle, la force électromotrice de la machine étant trop faible, et où l'on fonctionne alors en commutation forcée dite parfois séquentielle ou mode cadencé en commandant le pont de thyristors relié au réseau avec des angles d'allumage des thyristors de telle sorte que l'on soit à ouverture dite «plein onduleur». La commutation des thyristors du pont machine se fait alors à courant nul. Ce fonctionnement a pour conséquence une annulation du couple moteur à chaque commutation du pont machine dans le domaine des très basses vitesses.

Dans le brevet précité, on pallie cet inconvénient en ajoutant une connexion auxiliaire reliant le centre du bobinage étoile du stator de la machine synchrone au centre du bobinage étoile du secondaire du transformateur alimentant le pont réseau ou bien, dans le cas où le pont réseau est constitué de deux ponts complets reliés en série, au point assurant la mise en série des deux ponts; et en commandant séparément le demi-pont supérieur et le demi-pont inférieur ou bien en commandant séparément les deux ponts mis en série.

Cela permet de maintenir le courant dans la phase du moteur non commutée, le courant circulant dans l'une des deux connexions reliant le pont réseau au pont machine, et dans la connexion auxiliaire, ce qui permet de réduire la pulsation du couple.

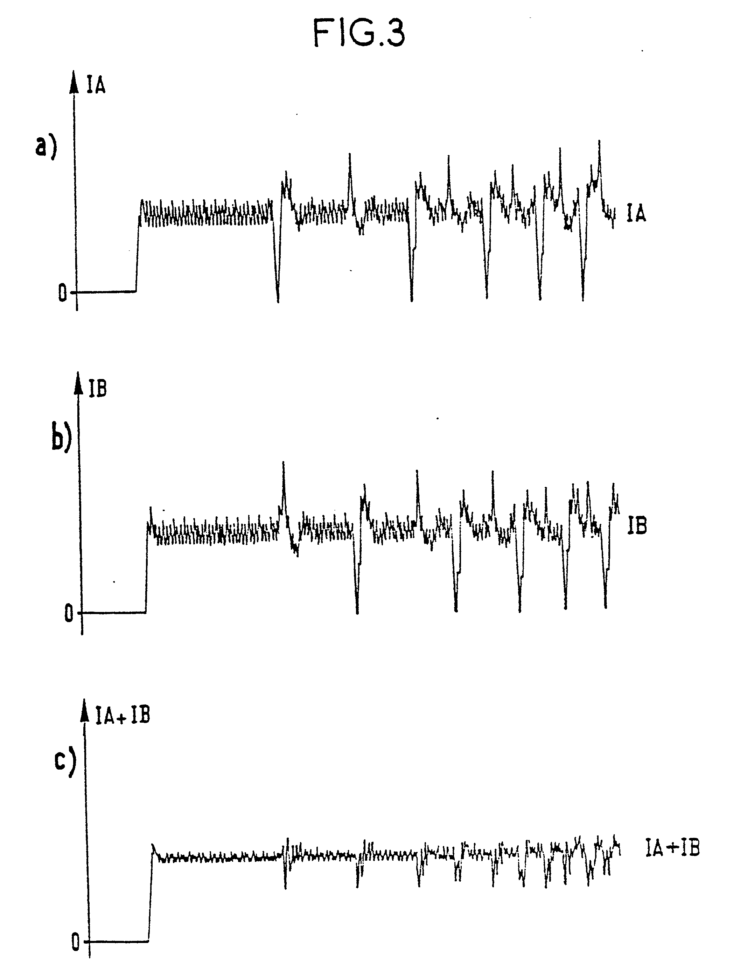

Le document «Brown Boveri Review», volume 67, n° 10, octobre 1980, page 581 figure 3e montre une machine synchrone qui comprend deux enroulements statoriques décalés de 30° et alimentés chacun par un convertisseur statique alternatif-alternatif complet constituant un onduleur autosynchrone comprenant un pont relié au réseau et un pont relié à la machine, les deux ponts étant reliés par un conducteur supérieur et par un conducteur inférieur. Un tel montage permet de diminuer la pulsation qui existe même en régime de commutation naturelle à cause de la progression par à-coup du champ tournant lors des commutations.

En effet, si la machine ne comprend qu'un seul enroulement statorique alimenté par un convertisseur, le champ progresse par à-coup de 60° électrique, avec le système proposé, les à-coups ne sont plus que de 30°. Cependant, rien n'est proposé en régime de commutation forcée pour pallier la perte de couple dûe au courant nul dans les conducteurs supérieur et inférieur de liaison des deux ponts du convertisseur pour lequel on est en cours de commutation forcée sur le pont relié à la machine.

Le document DE-A-3 021 864 décrit un système dont le but est le même que celui du document précédent mais qui comprend trois convertisseurs au lieu de deux et dont la machine ne comprend qu'un seul enroulement statorique, ce qui implique un transformateur entre chaque convertisseur et la machine afin de décaler les instants de commutation.

Ce document ne résoud pas non plus le problème de la pulsation de couple de la machine, en régime de commutation forcée des ponts reliés à la machine synchrone.

Ce document montre bien une commande dans laquelle un régulateur de courant agit en fonction de la mesure de courant des trois convertisseurs et d'un signal de courant moyen de référence élaboré par un régulateur de vitesse mais une telle commande a pour but de répartir également la charge sur les trois convertisseurs et n'agit que sur la valeur moyenne du courant. En effet, la constante de temps d'un régulateur de courant est de l'ordre d'une vingtaine de millisecondes, or la durée totale d'une commutation en régime cadencée est de l'ordre de 10 millisecondes.

La présente invention a pour but de supprimer la pulsation de couple en régime de commutation forcée, c'est-à-dire en marche à basse vitesse de la machine.

L'invention a donc pour objet un ensemble d'alimentation et de commande d'une machine tournante synchrone fonctionnant à vitesse variable alimentée par des interrupteurs statiques commandés, le stator de la machine tournante comprenant n enroulements polyphasés, n étant au moins égal à deux, chaque enroulement polyphasé étant alimenté par un convertisseur statique alternatif-alternatif constituant un onduleur autosynchrone comprenant un pont réseau et un pont machine reliés l'un à l'autre par un conducteur supérieur et un conducteur inférieur, l'ensemble comprenant des moyens de commande des ponts «réseau» de chaque convertisseur de telle façon que la somme des courants unidirectionnels circulant dans lesdits conducteurs supérieur et inférieur de tous les convertisseurs soient proportionnels à une valeur de consigne de courant moyen de référence, lesdits moyens de commande comprenant pour chaque pont «réseau» un circuit de commande d'impulsion dont l'entrée reçoit un signal élaboré par un circuit sommateur, ce circuit sommateur recevant, en régime de basse vitesse de la machine, ou bien, lors des instants de commutation sur le pont machine associé, un signal de commande d'ouverture plein onduleur envoyé pour l'extinction forcée des thyristors dudit pont «réseau», ou bien, en dehors des instants de commutation, le signal d'un régulateur du courant du pont associé, ou bien, lors des instants de commutation sur un autre pont machine, ledit signal du régulateur et un signal représentatif de la valeur instantanée de la différence entre le courant moyen de référence et la somme des courants unidirectionnels instantanés.

Il est à noter qu'il est compris dans l'état de la technique, par le document EP-A1-66 191, sous les

dispositions de l'article 54 (3) de la CBE un système modifié de l'ensemble présent d'alimentation et de commande, dans lequel le convertisseur statique est constitué par un seul pont machine et deux ponts réseaux mis en série, deux circuits de courant étant réalisés au moyen d'une connexion auxiliaire reliant le point neutre de la machine synchrone au point commun des deux ponts réseaux.

Selon une réalisation préférée, ledit signal du régulateur du courant est élaboré par un régulateur de courant à partir du signal de sortie d'un régulateur de vitesse et du courant mesuré dudit pont «réseau», et ledit signal représentatif de ladite valeur instantanée est élaboré par un circuit comparateur comparant le signal de sortie dudit régulateur de vitesse à ladite somme des courants unidirectionnels instantanés.

Avantageusement, le stator de la machine tournante comprend deux enroulements triphasés décalés l'un par rapport à l'autre de 30°.

L'invention sera bien comprise à la lumière de la description d'un exemple de réalisation, faites ci-après en regard du dessin annexé dans lequel:

La figure 1 donne une représentation schématique d'une alimentation d'une machine tournante synchrone comprenant deux enroulements stator triphasés.

La figure 2 représente schématiquement la commande de l'alimentation.

La figure 3 est un diagramme représentant différents courants.

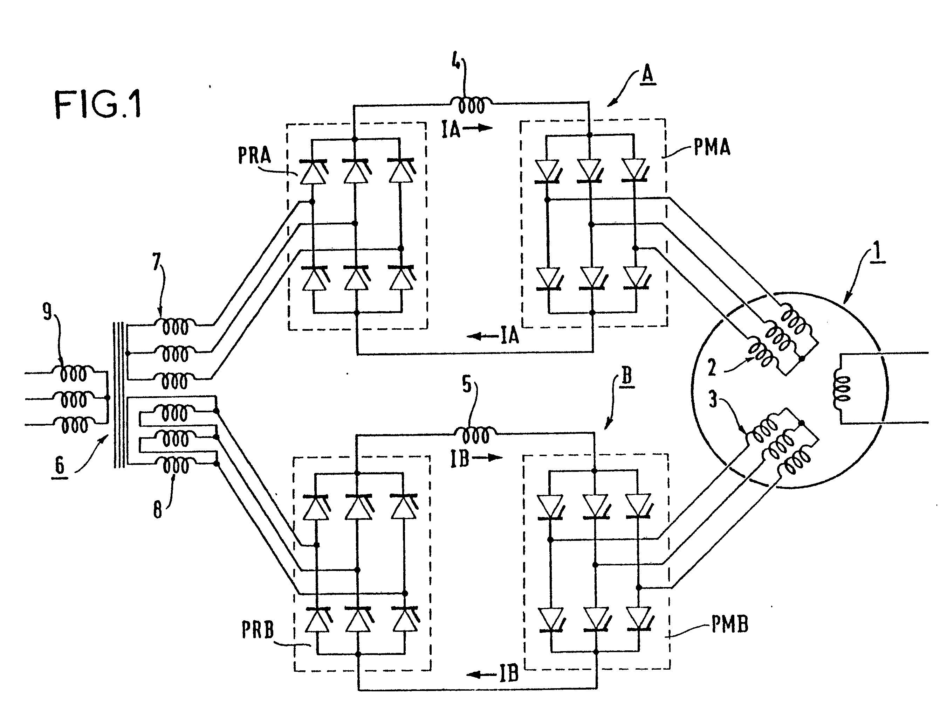

En se reportant à la figure 1, l'ensemble comprend un moteur synchrone 1 comprenant deux enroulements triphasés statoriques 2 et 3 décalés à 30°. Chaque enroulement statorique est alimenté par un convertisseur statique A pour l'enroulement 2 et B pour l'enroulement 3. Le convertisseur A comprend un pont réseau PRA et un pont machine PMA et le convertisseur B comprend un pont réseau PRB et un pont machine PMB. Tous ces ponts sont des ponts triphasés à thyristors. Le convertisseur A comprend en outre une inductance de boucle 4 et le convertisseur B une inductance de boucle 5. Les ponts réseaux PRA et PRB sont alimentés par un transformateur 6 à deux enroulements secondaires 7 et 8 et à un enroulement primaire 9. L'enroulement secondaire 7 est monté en étoile et l'enroulement secondaire 8 est monté en triangle de manière à supprimer les harmoniques de rang cinq et sept.

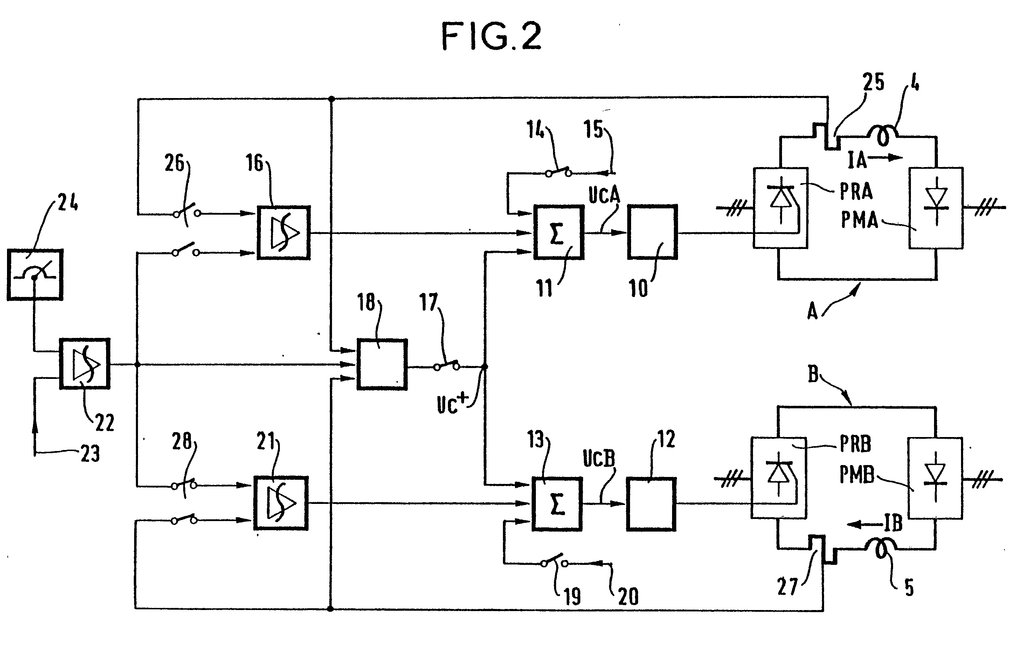

Chaque convertisseur fonctionne selon sa propre logique en marche cadencée et, selon l'invention, le dispositif de commande de la figure 2 réalise la réduction de pulsation du couple en compensant la perte de couple qu'occasionne le passage par zéro du courant IA ou IB dans le convertisseur dont les thyristors du pont machine sont en cours de permutation de conduction, en provoquant une augmentation concomitante du courant dans le convertisseur resté en conduction.

Sur cette figure 2, les convertisseurs A et B sont représentés d'une manière simplifiée. Le pont réseau PRA est commandé par un circuit de commande d'impulsions 10 recevant une tension de commande $U_cA$ délivrée par un circuit sommateur 11 et le pont réseau PRB est commandé par un circuit de commande d'impulsions 12 recevant une tension de commande $U_cB$ délivrée par un circuit sommateur 13.

Le circuit sommateur 11 comporte trois entrées: la première reçoit, par l'intermédiaire d'une porte 14, un signal de commande plein onduleur du pont réseau PRA arrivant sur un conducteur 15, la seconde reçoit le signal de sortie d'un régulateur 16 du courant IA circulant dans la boucle à courant continu du convertisseur A, et la troisième est reliée, par l'intermédiaire d'une porte 17, à un circuit comparateur 18. De même, le circuit sommateur 13 comporte également trois entrées: la première reçoit, par l'intermédiaire d'une porte 19, un signal de commande plein onduleur du pont PRB arrivant sur un conducteur 20, la seconde reçoit le signal de sortie d'un régulateur 21 du courant IB circulant dans la boucle à courant continu du convertisseur B et la troisième est reliée également au circuit comparateur 18 par l'intermédiaire de la porte 17.

Le comparateur 18 compare la somme des courants IA + IB à un signal consigne de courant moyen élaboré par un régulateur de vitesse 22. Le signal de sortie du comparateur 18 est proportionnel à la différence entre ce signal de consigne du courant moyen et la somme des courants IA + IB. Le régulateur de vitesse 22 élabore ce signal de consigne du courant moyen à partir de la mesure de la vitesse de la machine synchrone 1 dont on envoie un signal image de cette vitesse sur une entrée 23 et à partir d'un signal de consigne de vitesse élaboré par un circuit 24. Le signal de consigne de courant moyen élaboré par le régulateur de vitesse 22 est également envoyé sur une entrée du régulateur 16 du courant IA qui reçoit en outre un signal mesure du courant IA élaboré par un réducteur de courant 25. Ces deux signaux sont appliqués au régulateur 16 par une porte 26. De même, le signal de sortie du régulateur de vitesse 22 est aussi envoyé sur une entrée du régulateur 21 du courant IB élaboré par un réducteur de courant 27. Ces deux signaux sont aussi appliqués à deux entrées du régulateur 21 par une porte 28.

Le fonctionnement de l'ensemble est le suivant: 1 – cas d'une commutation sur le pont machine PMA. Les portes 14, 17 et 28 sont fermées et les portes 19 et 26 sont ouvertes.

Le pont PRA est commandé «plein onduleur» par envoi du signal de commande plein onduleur, conducteur 15, sur une entrée du circuit sommateur 11. Le pont PRB reçoit une consigne supplémentaire $U_c+$ provenant du circuit comparateur 18, qui commande une élévation du courant IB compensant la disparition momentanée du courant IA.

Le régulateur 21 du courant IB est en fonctionnement, par contre, le régulateur 16 du courant IA est mis hors fonctionnement par l'ouverture de la porte 26 d'entrée de consigne et de la mesure de courant. Le régulateur conserve son état de sortie précédent l'instant de la commutation et reprend son fonctionnement normal à la fin de la commutation, le signal $U_cA$ en sortie du circuit 11 reprenant ainsi la valeur qu'il avait au moment du début de la commutation du pont machine PMA.

La consigne $U_c+$ est élaborée par le comparateur 18 qui compare la somme des courants instantanés IA + IB à la consigne de courant moyen de référence provenant du circuit 22.

2 – Dans le cas d'une commutation sur le pont machine PMB, les portes 19, 26 et 17 sont fermées et les portes 14 et 28 sont ouvertes, le fonctionnement est symétrique de celui du cas exposé ci-dessus. Sur cette figure 2, les portes ont été représentées dans leur état correspondant à une commutation sur le pont PMA.

Le dispositif peut s'appliquer aussi dans le cas d'un nombre d'enroulements statoriques ayant un nombre de phases différent de trois et aussi dans le cas où il y a plus de deux enroulements statoriques.

La figure 3 donne une représentation graphique des courants, en a est représenté le courant IA, en b le courant IB et en c la somme des courants IA + IB. On constate, que lors des passages par zéro de l'un des courants IA ou IB, l'autre courant est augmenté d'une quantité telle que la somme des courants IA + IB vaille sensiblement $\frac{\sqrt{3}}{2}$ fois la valeur moyenne de IA + IB en dehors de ces périodes de changement de conduction. Le couple électromagnétique de la machine est ainsi rendu pratiquement constant.

## Revendications

1. Ensemble d'alimentation et de commande d'une machine tournante synchrone (1) fonctionnant à vitesse variable alimentée par des interrupteurs statiques commandés, le stator de la machine tournante comprenant n enroulements polyphasés (2, 3), n étant au moins égal à deux, chaque enroulement polyphasé étant alimenté par un convertisseur statique (A, B) alternatif-alternatif constituant un onduleur autosynchrone comprenant un pont réseau (PRA, PRB) et un pont machine (PMA, PMB) reliés l'un à l'autre par un conducteur supérieur et un conducteur inférieur, l'ensemble comprenant des moyens de commande des ponts «réseau» de chaque convertisseur de telle façon que la somme des courants (IA + IB) unidirectionnels circulant dans lesdits conducteurs supérieur et inférieur de tous les convertisseurs soient proportionnels à une valeur de consigne de courant moyen de référence, lesdits moyens de commande comprenant pour chaque pont «réseau» un circuit de commande d'impulsion (10, 12) dont l'entrée reçoit un signal (UcA, UcB) élaboré par un circuit sommateur (11, 13), ce circuit sommateur recevant, en régime de basse vitesse de la machine, ou bien, lors des instants de commutation sur le pont machine associé, un signal de commande d'ouverture plein onduleur (15, 20) envoyé pour l'extinction forcée des thyristors dudit pont «réseau», ou bien, en dehors des instants de commutation, le signal d'un régulateur (16, 21) du courant du pont associé, ou bien, lors des instants de commutation sur un autre pont machine, ledit signal du régulateur et un signal représentatif de la valeur instantanée de la différence entre le courant moyen de référence et la somme (IA + IB) des courants unidirectionnels instantanés.

2. Ensemble d'alimentation et de commande selon la revendication 1, caractérisé en ce que ledit signal du régulateur du courant est élaboré par un régulateur de courant (16, 21) à partir du signal de sortie d'un régulateur de vitesse (22) et du courant mesuré (IA, IB) dudit pont «réseau» et en ce que ledit signal représentatif de ladite valeur instantanée est élaboré par un circuit comparateur (18) comparant le signal de sortie dudit régulateur de vitesse à ladite somme (IA + IB) des courants unidirectionnels instantanés.

3. Ensemble d'alimentation et de commande selon l'une des revendications 1 ou 2, caractérisé en ce que le stator de la machine tournante comprend deux enroulements triphasés (2, 3) décalés l'un par rapport à l'autre de 30°.

## Claims

1. A unit for supplying power and for controlling a synchroneously rotating machine (1) which operates at variable speed and is fed by controlled static switches, the stator of the rotating machine comprising n polyphase windings (2, 3), n being at least equal to 2, each polyphase winding being fed by a static AC–AC converter (A, B) which constitutes an autosynchroneous inverter having a mains bridge (PRA, PRB) and a machine bridge (PMA, PMB), connected to each other by an upper and a lower conductor, the unit comprising means for controlling the mains bridge of each converter in such a way that the sum of the unidirectional currents (IA + IB) in the upper and lower conductors of all converters is proportional to a reference average current set value, said control means comprising for each mains bridge a pulse control circuit (10, 12) the input of which receives a signal (UcA, UcB) generated by a summing circuit (11, 13), this summing circuit receiving at low machine speed or during the instants of commutation on the associated machine bridge, a signal which opens fully the inverter (15, 20) and which ensures a forced extinction of the thyristors of said mains bridge, or receiving, outside the commutation instants, the signal from a regulator (16, 21) for regulating the current of the associated bridge, or receiving, during the instants of commutation on another machine bridge, said system from the regulator and a signal which is significant for the instant value of the difference between the average reference current and the sum (IA + IB) of the instant unidirectional currents.

2. A power supply and control unit according to claim 1, characterized in that said signal generated by the current regulator is generated by a current regulator (16, 21) on the basis of the output signal of a speed regulator (22) and of the measured current (IA, IB) of said mains bridge, and that the signal which is significant for said instant value is generated by a comparator circuit (18) which compares the output signal of said speed regulator to said sum (IA + IB) of the instant unidirectional currents.

3. A power supply and control unit according to one of claims 1 and 2, characterized in that the stator of the machine has two three-phase windings (2, 3) at 30° to each other.

**Patentansprüche**

1. Speise- und Steuereinheit für eine Synchronmaschine (1), die mit variabler Geschwindigkeit betrieben und über statische gesteuerte Schalter gespeist wird, wobei der Stator der Maschine n Mehrphasenwicklungen (2, 3) besitzt und n mindestens gleich 2 ist, wobei jede Mehrphasenwicklung von einem statischen Wechselstrom-Wechselstromkonverter (A, B) gespeist wird, der einen autosynchronen Umrichter bildet und eine netzseitige Brücke (PRA, PRB) und eine maschinenseitige Brücke (PMA, PMB) aufweist, die miteinander über einen oberen und einen unteren Leiter verbunden sind, wobei die Einheit Mittel zur Steuerung der netzseitigen Brücken jedes Konverters aufweist, derart, dass die Summe der unidirektionalen Ströme (IA + IB), die im oberen und im unteren Leiter aller Konverter fliessen, proportional zu einem mittleren Bezugsstrom-Sollwert sind, wobei die Steuermittel für jede netzseitige Brücke einen Impulssteuerkreis (10, 12) enthalten, dessen Eingang ein von einem Summierkreis (11, 13) erzeugtes Signal (UcA, UcB) empfängt, wobei der Summierkreis während des Betriebs bei niederen Drehgeschwindigkeiten oder während der Umschaltaugenblicke auf die zugeordnete Maschinenbrücke ein Steuersignal zur vollen Öffnung der Umrichters (15, 20) empfängt, das zur erzwungenen Löschung der Thyristoren dieser netzseitigen Brücke dient bzw. ausserhalb der Umschaltzeitpunkte das Signal eines Stromreglers (16, 21) der zugeordneten Brücke empfängt bzw. während der Augenblicke der Umschaltung auf eine andere Maschinenbrücke das Signal des Reglers und ein Signal empfängt, das für den Augenblickswert der Differenz zwischen dem mittleren Bezugsstrom und der Summe (IA +) der unidirektionalen augenblicklichen Ströme repräsentativ ist.

2. Speise- und Steuereinheit nach Anspruch 1, dadurch gekennzeichnet, dass das Signal des Stromreglers von einem Stromregler (16, 21) ausgehend vom Ausgangssignal eines Geschwindigkeitsreglers (22) und vom gemessenen Strom (IA, IB) der netzseitigen Brücke erzeugt wird und dass das für den Augenblickswert repräsentative Signal von einem Komparatorkreis (18) erzeugt wird, der das Ausgangssignal des Geschwindigkeitsreglers mit der Summe (IA + IB) der augenblicklichen unidirektionalen Ströme vergleicht.

3. Speise- und Steuereinheit nach einem der Ansprüche 1 oder 2, dadurch gekennzeichnet, dass der Stator der Maschine zwei dreiphasige Wicklungen (2, 3) aufweist, die gegeneinander um 30° versetzt sind.

FIG.1

# FIG.2

# FIG.3